Europäisches Patentamt

European Patent Office

Office européen des brevets

(11) Publication number: **0 678 662 A2**

# EUROPEAN PATENT APPLICATION

(21) Application number: **95103689.6**

(22) Date of filing: **14.03.95**

(51) Int. Cl.6: **F02D 41/14**, F02D 41/18

(30) Priority: **15.03.94 JP 44235/94**

(43) Date of publication of application:
**25.10.95 Bulletin 95/43**

(84) Designated Contracting States:
**DE FR GB**

(71) Applicant: **YAMAHA HATSUDOKI KABUSHIKI KAISHA**
**2500 Shingai**
**Iwata-shi**
**Shizuoka-ken, 438 (JP)**

(72) Inventor: **Suzuki, Toshio**

2500 Shingai
Iwata-shi,
Shizuoka-ken, 438 (JP)
Inventor: **Iida, Yoshikatsu**
2500 Shingai
Iwata-shi,
Shizuoka-ken, 438 (JP)

(74) Representative: **Grünecker, Kinkeldey,**
**Stockmair & Schwanhäusser**
**Anwaltssozietät**
**Maximilianstrasse 58**
**D-80538 München (DE)**

(54) **Method and apparatus for controlling a gas-fuelled engine.**

(57) The present invention refers to a method and apparatus for controlling a gas-fuelled engine, performing a feedback control of air/fuel ratio towards a target air/fuel ratio controlling a fuel supply by means of a bleed air control in response to a signal from an exhaust gas sensor detecting an oxygen content in said exhaust gas, wherein an engine condition, such as an engine performance demand is additionally detected and used as an additional control parameter of the feedback control of the air fuel ratio. Preferably, such an engine condition responsive parameter in addition to an engine performance demand, is an amount of intake air or other parameters influencing said volume of intake air flow, such as engine load and/or engine speed.

FIG.1

EP 0 678 662 A2

This invention concerns a method and an apparatus for controlling a gas-fuelled engine, specifically for air/fuel mixture-forming in gas-fuelled engines that use LPG, LNG, CNG or other gaseous fuel; in particular it relates to a method and a device for air/fuel mixture-forming in which the amount of the gaseous fuel supplied is controlled by feedback control to achieve the target air/fuel ratio.

One method, known to the art and creating an air/fuel mixture to feed to gas-fueled engines, increases or decreases the amount of gaseous fuel supplied according to the air intake volume, and in addition the method involves the supply of control air to the gaseous fuel supply system, detecting whether the mixture concentration is richer or leaner than the target air/fuel ratio, and based upon those detected results, exercises feedback control over the supply of the above mentioned control air to achieve a mixture at the target air/fuel ratio.

The above described air/fuel mixture-forming method enables accurate and quick response corrections in the gaseous fuel supply with respect to changes in the air intake flow volume and maintains the air/fuel mixture ratio at its target value (for example, at the stoichiometric air/fuel ratio).

An air/fuel mixture-forming device known to the art that implements the above described method is composed of a variable venturi mixer which increases or decreases the supply of gaseous fuel according to the air intake volume, a control valve that controls the supply of control air to the gas fuel supply system, a sensor to detect whether the air/fuel mixture concentration is richer or leaner than the target mixture, and a feedback control means which, based upon the detection results of said sensor, performs feedback control of the supply of control air to adjust the air/fuel ratio to the target value (See EP-A-575 939).

The above described air/fuel mixture-forming device employs a control valve driven by a step motor, for example to control the supply of control air. The number of motor steps (STP) determines is the basis for the feedback control (the aperture of the control valve). Specifically, the control is performed on the basis of a coefficient (FK) that is multiplied by the step number (STP) (which will be called the "feedback coefficient" below).

At each point in time, the step number (STP) is computed using the following equation.

$$STP = FK \times STP \qquad (1)$$

The supply of control air over which feedback is exercised could be based, for example, upon the output signal from the $O_2$ or other sensor (in other words, whether it was richer or leaner than the target mixture concentration), and the feedback coefficient could be increased or decreased at the prescribed rate over time t ($= d\mathrm{FK}/dt$).

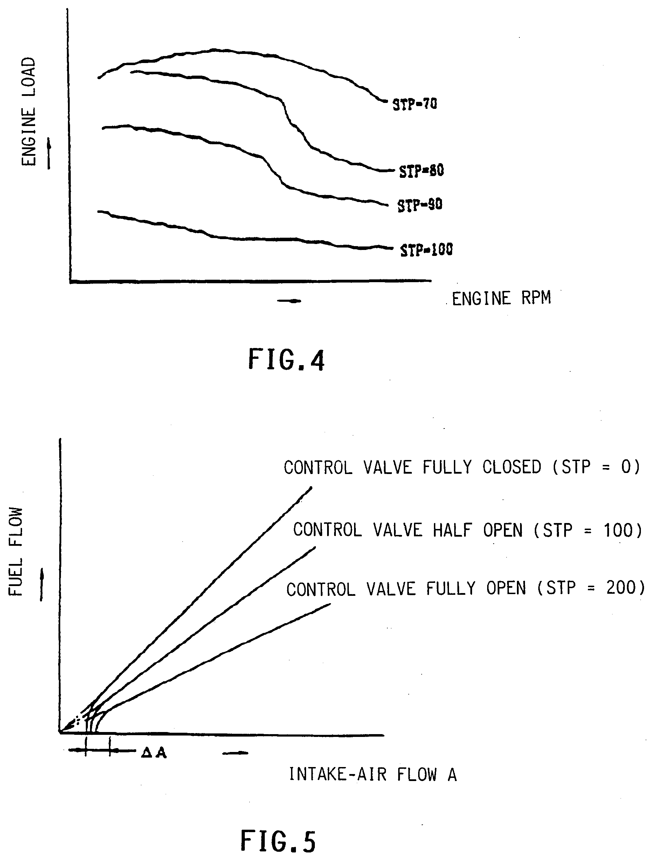

However, since the step number STP changes according to the engine load as shown in Figure 4, and since the feedback coefficient FK was increased or decreased in the prior art to attain the target (stoichiometric) air/fuel mixture, without regard to engine load, the air fuel ratio at a specific step number STP could vary due to engine load. Accordingly, it was difficult to achieve the target value (for example the stoichiometric value) across the entire engine operating range. In practice, the step number STP would become lower during high load operations, and in order to be able to vary the step number by the same number of steps in the high load range, the feedback coefficient FK had to be set at a value that was higher than the one for low load operations. The horizontal axis in Figure 4 shows the RPM, while the vertical axis shows the engine load in this graph showing various step numbers.

Figure 5 shows the changes in the air/fuel ratio (A/F) for the air intake volume A with respect to the fuel flow volume F at various control valve apertures: fully closed (STP = 0), half open (STP = 100) and fully open (STP = 200). However, in actual operation, in order for the gaseous fuel to be drawn into the venturi, the air intake volume A must be above a certain level in order to generate the required negative pressure for the venturi (for example, -4 mm Aq). Accordingly, in the range ΔA where the air intake volume is low, the increment of change Δ(A/F) (= (A/F)/STP)) becomes much greater. It is difficult, therefore, to set the target air/fuel ratio in this ΔA range.

Accordingly, it is an objective of this invention to improve a method and an apparatus of the type as discussed herein before in that a more appropriate and accurate setting of the target value for controlling air/fuel mixture ratio throughout the entire engine operating range is obtained.

Moreover, the present invention should advantageously allow to hold down the variation in the air/fuel ratio across the entire operating range of the engine, thereby maintaining the catalyst at optimal efficiency in cleansing exhaust gases.

In order to achieve the aforementioned objective, the present invention provides a method as indicated in the preamble of claim 1 which is improved in that additionally an engine condition, such as for example, an engine signal performance demand is detected and used as an additional control parameter of the feedback control of the air/fuel ratio.

Preferably, said additional control parameter is the volume of intake air flow (per unit time) or a parameter (or a combination of parameters) influencing said necessary amount of intake air, such as engine load and/or speed, or a pressure in the air intake system.

Moreover, in terms of the apparatus the present invention as set out in the preamble of claim 6 is characterised in that the control means is adapted to receive an engine condition responsive signal to derive a feedback coefficient FK for calculating a number of motor steps STP of a stepping motor, adjusting a bleed control valve for regulating a fuel supply by a supply of bleeding air in response to the engine performance demand a responsive signal determining the volume of intake air flow.

Other preferred embodiments of the present invention are laid down in the further subclaims.

Since this invention uses an engine condition representing parameter, such as for example, engine performance demand representing parameter, preferably the air intake volume or parameter influencing it (engine load, engine RPM or both) as a control variable in its feedback control, it is possible to correct for differences in engine load or for low air intake ranges that cause variations in the air/fuel ratio in the control variable, thereby making it possible to accurately set the air/fuel mixture throughout the entire engine operating range.

In addition, this invention also allows keeping the number of feedback cycles constant with respect to the air intake volume, thereby holding down any variations in the mixture ratio throughout the entire engine operating range, and enabling the catalyst to maintain a high exhaust gas cleansing efficiency.

An embodiment of this invention will now be explained with reference to the attached Figures, wherein:

Figure 1 is a component diagram of a gas-fuelled engine equipped with a mixture-forming device of this invention,

Figure 2 is a graph showing the relationship between an $O_2$ sensor's output and the feedback coefficient FK,

Figure 3 is a flow chart of the feedback control procedure,

Figure 4 is a figure showing step lines for engine RPM and engine load, etc.,

Figure 5 is a figure showing the fuel volume with respect to the air intake volume as a parameter of a control valve aperture,

Figure 6 is a graph showing the relationship between feedback frequency and exhaust gas cleansing efficiency, and

Figure 7 is a graph showing the change in feedback frequency with respect to air intake volume.

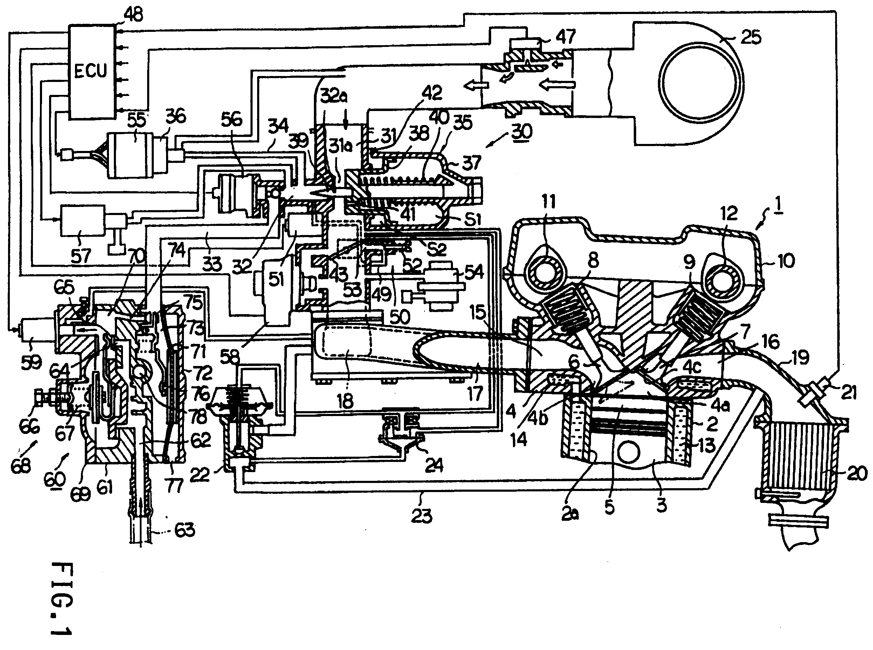

Figure 1 is a component diagram of a gas-fueled engine equipped with the air/fuel mixture-forming device of this invention.

The gas-fueled engine 1 shown in Figure 1 is a water-cooled, four cylinder, four valve engine. Pistons 3 have been slidably inserted into the four cylinder bores 3a present in the cylinder block 2, and each piston is linked to the crankshaft (not shown) by connecting rods.

Covering the foregoing cylinder block 2 is cylinder head 4, comprising four concave combustion areas 4a formed on its bottom surface. The combustion chamber 5 is formed in the space bounded by said concave combustion areas 4a and the tops 3a of the foregoing pistons 3. Two openings for the air intake ports 4b and the exhaust ports 4c are present in each of the concave areas 4a of the cylinder head 4, and these air intake ports 4b and exhaust ports 4c accommodate air intake valves 6 and exhaust valves 7 which are opened and closed at an appropriate timing. To wit, the air intake valves 6 and exhaust valves 7 comprise air intake ports 4b and exhaust ports 4c normally closed by the action of springs 8 and 9 but are opened and closed at an appropriate timing by camshafts 11, 12 rotatably housed inside the head cover 10.

Cooling jackets 13 and 14 have also been formed in the foregoing cylinder block 2 and cylinder head 4. Liquid coolant is circulated through these cooling jackets 13, 14 to provide cooling action by means of a coolant pump not shown in the figure.

The foregoing cylinder head 4 additionally comprises an air intake passage 15 which passes to the combustion chamber 5 through the foregoing air intake ports 4b and an exhaust passage 16 which passes from the combustion chamber 5 through the foregoing exhaust ports 4c. One end of the air intake manifold 17 is connected to the air intake passage 15, and the other end of said air intake manifold is connected with the plenum chamber 18.

One end of an exhaust manifold 19 connects to the foregoing exhaust passage 16 and the other end of said exhaust manifold 19 is connected to the catalytic converter 20. An $O_2$ sensor 21 to detect the oxygen concentration is affixed midway in said exhaust manifold. The catalytic layer in the foregoing catalytic converter 20 includes a so-called three-element catalyst which oxidizes carbon monoxide (CO) and hydrocarbons (HC) and reduces oxides of nitrogen ($No_x$).

The above mentioned $O_2$ sensor is of the type which changes the current level based on the difference between the oxygen concentration in the exhaust gas and the oxygen concentration in the atmosphere.

When the differential in oxygen concentration rises above a certain value, to wit, when it is richer than the stoichiometric air/fuel concentration, it emits a detection signal. It would, however, be possible as well to use the type of $O_2$ sensor that issues a signal when the air/fuel mix is too lean.

The foregoing plenum chamber 18 is connected to the above mentioned exhaust manifold 19 by means of an EGR passage 23 which holds an EGR valve. The EGR valve 22 is opened and closed by negative intake pressure from the EGR regulator; it serves to introduce EGR gases into the plenum chamber 18.

An air cleaner 25 connects to the upstream-side opening in the foregoing plenum chamber through the mixture-forming device 30 of this invention. The air/fuel mixture created by this mixture-forming device 30 passes through the air intake manifold and is sent to the foregoing combustion chambers 5 where it is burned.

Now, the structure of the air/fuel mixture-forming device 30 will be described.

The air/fuel mixture-forming device 30 of this invention is composed of: an air intake passage 31 that links the foregoing air cleaner 25 and the above mentioned plenum chamber 18; a fuel supply chamber 32 that was formed as a unit with said air intake passage 31; a gaseous fuel passage 30 which connects said fuel supply chamber 32 with a gaseous fuel source (not shown); a bleed air passage 34 that connects the foregoing fuel supply chamber 32 to the air cleaner 25; a variable venturi mixer 35, which can variably control the passage cross-section of the venturi unit 31a of the foregoing air intake passage 31; an air bleed control valve 36 (hereinafter abbreviated "ABCV") that can change the cross section of the foregoing bleed air passage 34 to control the amount of bleed air that is used as the control air supplied to the foregoing fuel supply chamber 32; and a regulator 60 which adjusts the pressure of the fuel supplied to the foregoing fuel supply chamber 32.

The above mentioned variable venturi mixer 35 is installed in the venturi area 31a of the foregoing air intake passage 31. It consists of a tightly sealed box-shaped chamber 37 that contains a slidably installed piston 38 with a needle valve (metering rod) 39 installed at the front end of said piston and which can advance and retreat with respect to the main jet 32a of the foregoing fuel supply chamber 32. The main jet 32a and the needle valve 39 assume shapes making it possible to maintain a virtually constant air/fuel ratio due to the average value of the opening of the foregoing ABCV 36 being held to an approximately constant value irrespective of the air intake volume.

A spring 40 installed in the chamber 37 pushes the foregoing piston 38 toward the closed direction (toward the left in Figure 1) in a manner such that the chamber 37 is partitioned by said piston 38 into air chambers S1, S2. One of the air chambers S1 is linked to the venturi area 31a of the foregoing air intake passage 31 by port 41, while the other air chamber S2 is connected to the outside atmosphere by port 42.

The valve 43, which is operated by the throttle, is located on the downstream side of the variable venturi mixer 35 in the foregoing air intake passage 31.

Attached to the foregoing air cleaner 25 is an air flow meter 47 which measures the amount of air intake. The output of said air flow meter 47 is fed into an engine control unit (hereinafter "ECU") 48. Although it is not shown in the Figures, a clogging sensor is also attached to the air cleaner 25 to detect the clogging of the filter element, and the output from that sensor is also fed to the foregoing ECU 48. Other signals that are fed to the ECU 48 by sensors not shown in the figures relate to the aperture of the foregoing throttle valve 43 (the load), the coolant temperature, the engine RPM, the output from the foregoing $O_2$ sensor, the exhaust temperature, and the absolute intake pressure.

Also, the above mentioned variable venturi mixer 35 is composed of the idle discharge line 49 leading from the fuel supply chamber, the fuel cutoff valve 51, and an idle circuit 50 that includes an adjustable needle valve 52 and an idle port 53. The idle port 53 opens to the downstream side of the idle position of foregoing throttle valve 43 inside the air intake passage 31. Furthermore, a negative pressure switch 54 is also located downstream of the throttle valve 43 in the air intake passage 31. The opening and closing of the above mentioned fuel cutoff valve 51 is controlled by the ECU 48, thereby controlling the fuel flow through the idle discharge line 49.

In the present embodiment, the aperture of the foregoing ABCV 36 is controlled by the drive of a step motor 55, and the drive of that step motor 55 is based on feedback control that will be described below.

Additionally shown in Figure 1 are the fuel supply control valve 56, the fuel shutoff valve 57, the idle speed control valve 58, and the auxiliary fuel supply valve 59.

At this point, the structure of the above mentioned regulator (vaporizer) 60, which supplies gaseous fuel to the above mentioned fuel supply chamber 32, will be explained.

Inlet passage 63 leads into the housing 61 of the regulator 60, and said inlet passage 62 is connected to the inlet pipe 63. This inlet passage 62 extends to the first pressure regulation port 64, and said first pressure regulation port 64 is controlled by the opening and closing of the first pressure regulation valve 65. This first pressure regulation valve is operated by a first force-exerting member 68 that includes an adjustment screw 66 and a spring 67.

Cover plate 69 is also attached inside the housing 61 to form the first pressure regulation chamber 70 inside the housing 61. The adjustment of the first force-exerting member 68 allows the pressure of the gaseous fuel in the foregoing first pressure regulation chamber 70 to be set at about 0.3 atg.

Furthermore, a diaphragm 71 and a second cover plate 72 are affixed to the opposite side of the foregoing first cover plate 69 inside the housing 61 to form the second pressure regulation chamber 73. This second pressure regulation chamber 73 is connected to the foregoing first pressure regulation chamber 70 by means of a passage 74.

The second pressure regulation valve 75 is located close to the second pressure regulation chamber 73 inside the above mentioned passage 74, which it can open and close. Said second pressure regulation valve 75 is linked to the foregoing diaphragm 71 by means of a second force-exerting member 76 which operates the valve. The back side of the diaphragm 71 is open to the atmosphere by means of an atmospheric port 77.

The adjustment of the foregoing second force-exerting member 76 makes it possible to set the pressure for the gaseous fuel in the foregoing second pressure regulation chamber 73 to a level that is slightly lower than atmospheric pressure. Gaseous fuel set to the pressure described above then passes through the gaseous fuel passage 33 to the above mentioned fuel supply chamber 32.

Moreover a heating passage 78 is located inside the housing 61. Coolant heated by heat exchange in the foregoing cooling jackets 13, 14 of engine 1 is circulated through this heating passage 78, thereby maintaining a stable gas temperature inside the regulator 60 and improving the vaporization and regulation of the fuel.

Next, the operation of the mixture-forming device 30 of this invention will be described.

When the gas fueled engine 1 is operating and during the air intake stroke of said engine 1, the air intake valves 6 open and the exhaust valves 7 close, and when the piston 3 descends in the cylinder bore 2a, the negative pressure that is generated in the cylinder bore 2a causes air to be drawn from inside the air cleaner 25. Said air, after having been cleaned by the air cleaner 25, flows in the direction of the arrow in Figure 1 through the air intake passage 31. At this time, the amount of air intake is detected by the above mentioned air flow meter 47, which emits a signal to the above mentioned ECU 48. Similarly, other detection signals such as the engine RPM, absolute air intake pressure, and the like are fed into the ECU 48.

A part of the air that is introduced through the air cleaner 25 is bleed air (control air) that passes from the bleed air passage 34 to the fuel supply chamber 32 and it regulates the pressure inside the fuel supply chamber and controls the amount of fuel supplied to said fuel supply chamber 32. In other words, the amount of fuel that is vaporized by the regulator 60 and is supplied to the fuel supply chamber is determined by the pressure differential between the fuel supply pressure of the regulator 60 and the pressure in the fuel supply chamber. As described above, the pressure inside the fuel supply chamber 32 can be adjusted by controlling the supply of bleed air to thereby control the fuel supply.

Here, the supplied amount of bleed air is controlled by adjusting the aperture of the ABCV 36, and this aperture adjustment of the ABCV 36 is implemented by a step motor 55 using feedback control.

When the engine is idling and the throttle valve 43 is completely closed, only a small volume of intake air is flowing through the air intake passage 31, but since the venturi unit 31a of the air intake passage 31 is maintained approximately at atmospheric pressure, the pressure inside the air chambers S1, S2 of the foregoing variable venturi mixer remains approximately equivalent (atmospheric pressure), hence a pressure differential is lacking to operate the piston 38, and the force of the spring 40 on said piston 38 causes the needle valve 39 to keep the main jet 32a of the fuel supply chamber 32 closed.

Accordingly, when engine 1 is idling, fuel is supplied through the above mentioned idle circuit 50, but at this time, since the connection with the fuel supply chamber 32 of the idle discharge line 49 is positioned closer to the main jet 32a than the connection with fuel supply chamber 32 by the foregoing air bleed passage 34, the fuel supply control is performed by the bleed air upstream of the idle discharge line 49. Accordingly, fuel controlled by the bleed air flows through the idle discharge line, thereby improving the response characteristics of the idle circuit 50.

Next, when the throttle is operated to gradually open the throttle valve 43, the operational status of the engine 1 changes from the idle state to the non-idle state. Then, the intake air flowing through air intake passage 31 increases and negative pressure is generated in the venturi area 31a of the air intake passage 31. At this point, through the port 41, the negative pressure acts upon one of the air chambers S1 of the variable venturi mixer 35, whereby the piston 38 moves in proportion to the pressure differential between the two air chambers S1, S2 (to wit, proportionally to the air intake flow) toward the chamber 37 (toward the right in Figure 1). The needle valve 39 attached to the piston front end opens the main jet 32a in the fuel supply chamber 32. The cross-sectional area of the opening of the main jet 32a is increased thereby, and in turn the flow of gaseous fuel from the fuel supply chamber to the air intake passage 31 also increases. The fuel mixes with the flowing air to form an air/fuel mixture of the required mixture ratio, and then the mixture is supplied to the combustion chambers 5 by way of the plenum chamber 18, the air intake manifold 17 and the air intake passages for each cylinder present in the cylinder head 4 of the engine 1.

The burning of the air/fuel mixture in the combustion chambers 5 generates exhaust gas which, during the exhaust stroke of the engine 1 wherein the air intake valves 6 are closed and the exhaust valves 7 are opened, are expelled from the combustion chamber 5 due to the upward stroke of the pistons 3 in the cylinder bores 3a, into the exhaust manifold 19, and then the gases pass through the catalytic converter 20 where the CO, HC, $NO_x$ and other gases are reduced and cleansed by the converter before the exhaust gas is expelled into the atmosphere by way of a muffler and tail pipe not shown in the figures.

Thus, as described above, even when the engine is in the non-idle state, the same kind of feedback control is used to control step motor 55 to adjust the aperture of ABCV 36 and control the bleed-air flow to the fuel supply chamber 32.

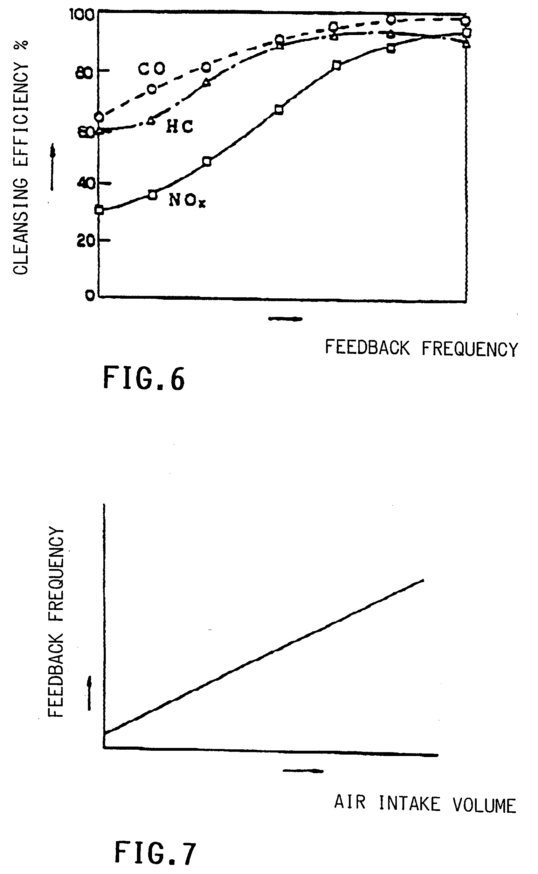

Figure 6 is a graph of the cleansing rate of the catalyst for carbon monoxide (CO), hydrocarbons (HC) and oxides of nitrogen ($No_x$) with respect to the feedback frequency (the number of times there is a change to the rich or lean side in order to achieve the target air/fuel mixture concentrations) for the case of the air intake volume being constant. The Figure shows an optimal feedback frequency for maintaining a high cleansing efficiency for the catalyst. Thus, as is clear from Figure 7, in order to maintain an optimal catalytic cleansing rate, it is necessary to vary the feedback frequency with respect to the amount of air intake.

However, in the prior art, the feedback frequency (the change with time of the feedback coefficient FK ($= d$FK$/dt$)) was determined without regard to the amount of air intake, so the amplitude of the variation in the A/F mixture increased due to differing engine operating conditions. This made it difficult to maintain the cleansing efficiency of the exhaust gases at the optimal level.

The feedback control will now be explained.

The feedback control of the step motor 55 is performed by controlling the step number STP ($= 0$ to 200) of said step motor 55. In this embodiment, the control is performed using a control variable obtained by multiplying a feedback coefficient FK with the step number.

To wit, at each point in time, the step number STP is computed using the following equation:

$$STP = (FK + 1000) \times STP/1000 \qquad (2)$$

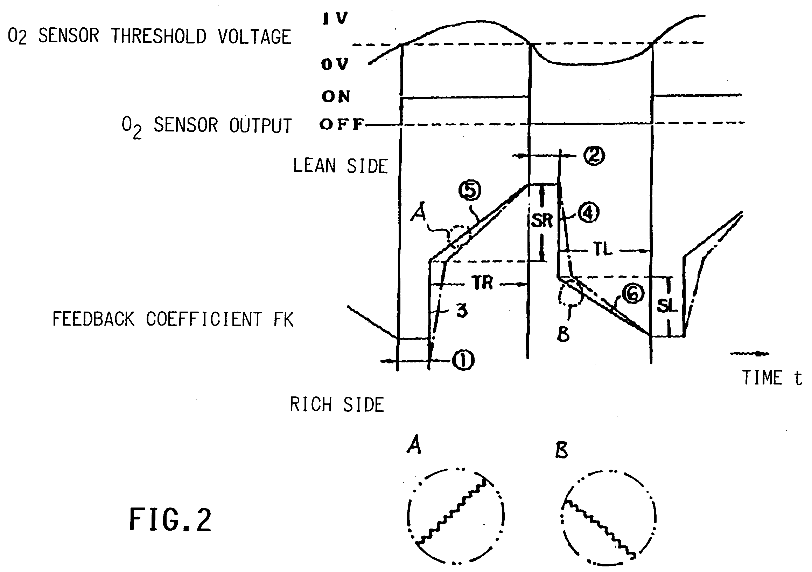

The feedback coefficient FK is based upon the output signal from the $O_2$ sensor 21 (in other words, whether or not the mixture concentration is richer than the target air/fuel mixture), and it is also controlled by a chronological change rate ($= d$FK$/dt$) as shown in Figure 2.

The following six factors are involved in determining the chronological change rate ($= d$FK$/dt$) for the feedback coefficient (see Figure 2).

(1) Rich delay
(2) Lean delay
(3) Rich skip
(4) Lean skip
(5) Rich proportional coefficient
(6) Lean proportional coefficient

As is shown in Figure 2, the upper limit of the feedback coefficient FK corresponds to the lean side, while the lower limit corresponds to the rich side.

Additionally, in this embodiment the feedback coefficient FK is also a function of engine load (actually the absolute intake pressure) wherein the aforementioned 6 factors (1) through (6) are specified at absolute pressures of 300, 450, 600, and 760 mm Hg as shown in Table 1. Extrapolation is used to obtain the values for factors (1) - (6) in the intermediate areas between the absolute pressures of 300, 450, 600 and 760 mm Hg.

Table 1

| Operating State | Idle | Non-Idle | | | |
|---|---|---|---|---|---|
| Absolute intake pressure (mm Hg) | | 300 | 450 | 600 | 760 |
| Rich delay | 16 | 16 | 16 | 12 | 8 |
| Lean delay | 12 | 12 | 12 | 12 | 12 |
| Rich skip | 10 | 30 | 70 | 80 | 100 |
| Lean skip | 10 | 30 | 70 | 80 | 100 |
| Rich timer frequency TR Lean timer frequency TL | 24 | 20 | 16 | 12 | 8 |
| Rich coefficient SR | 2 | 3 | 6 | 8 | 12 |
| Lean coefficient SL | 2 | 3 | 5 | 8 | 12 |

In Table 1, the rich timer frequency TR and the rich coefficient SR specify the rich proportional coefficient for (5) in Figure 2, while the lean timer frequency TL and the lean coefficient SL specify the lean proportional coefficient for (6) in Figure 2.

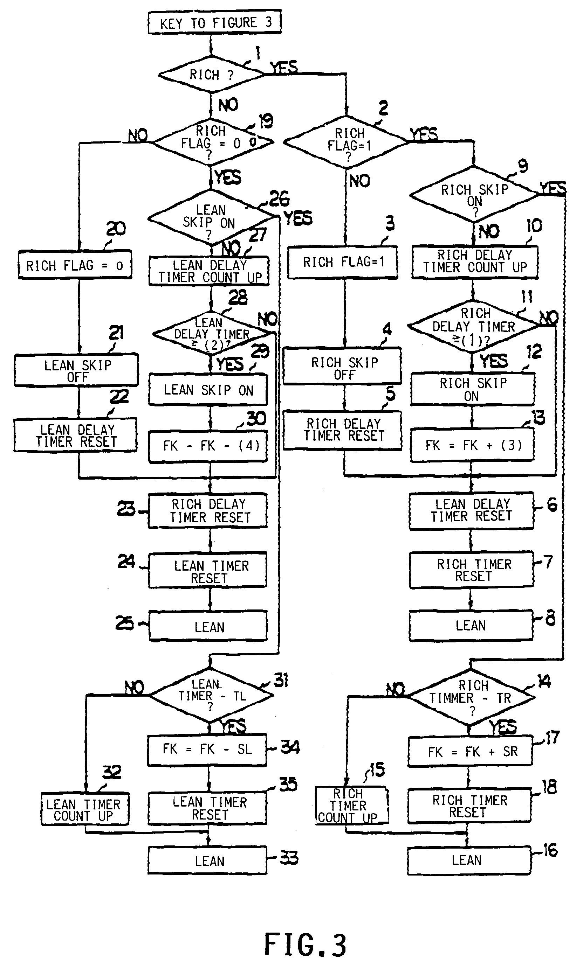

Next the feedback control procedure will be described based upon the flow chart in Figure 3, and with references to Figure 2. With regard to the feedback coefficient FK shown in Figure 2, the broken line shows the actual changes with time of the feedback coefficient FK with respect to the operation of the step motor 55 (ABCV 36).

Based upon the input from the $O_2$ sensor 21, the foregoing ECU 48 determines whether or not the mixture concentration is too lean with respect to the target air/fuel ratio (stoichiometric A/F ratio) (Figure 4, step 1).

If the voltage of the $O_2$ sensor 21 exceeds a certain value (500 mV, for example), as shown in Figure 2, the output of the $O_2$ sensor becomes ON, and the air/fuel concentration moves from the lean side to the rich side, so the result of the decision in step 1 is YES, and a decision is made whether or not the rich flag is 1 (step 2). In this case, since the rich flag would be set to 0 prior to turning to lean operations (see step 20), the decision at step 2 is NO, and thereupon the rich flag is set to 1 (step 3). After that, the lean skip is turned OFF (cleared) (step 4) and the rich delay timer is reset (step 5). Next, the lean delay timer is reset (step 6) and the rich timer is reset as well (step 7) before returning (step 8).

In a manner similar to that described above, since the rich flag is set to 1 (step 3), the decision in step 2 is YES, the program proceeds to step 9 where a determination is made as to whether or not the rich skip is ON, but since the rich skip was set OFF in step 4, the decision in step 9 is NO and the rich delay timer counts UP (step 10). This count UP continues until the rich delay timer is ≥ (1) (step 11). Then, when the rich delay timer becomes ≥ (1), the rich skip is turned ON (step 12), and (2) is added to the feedback coefficient FK (FK = FK + (3)) (step 12).

When (3) is added to the feedback coefficient FK as described above, then the feedback coefficient increases for an instant, and step number STP of the step motor 55 is increased according to the calculation in Equation (2) above. As a result, the aperture of ABCV 38 is increased to increase the amount of bleed air supplied to the fuel chamber 32, which increases the pressure in the fuel chamber 32 and reduces the supply of fuel. As a result, the air/fuel ratio moves to the lean side of the target ratio.

Since the rich skip is turned on when the above procedure is completed (step 12), the decision in step 9 is YES. Next, the rich timer counts UP until the rich timer ≥ TR (step 14-16). Then, when the rich timer reaches a value ≥ TR, the rich coefficient SR is added to the feedback coefficient (FK = FK + SR) (step 17) and the rich timer is reset (step 18).

When the rich coefficient SR is added to the feedback coefficient FK as described above, the computation in the foregoing equation (2) is performed to increase the step number STP for the step motor 55. As a result, the aperture of the ABCV 36 increases, and the amount of bleed air supplied to the fuel supply chamber 32 increases, thereby further increasing the pressure inside the fuel supply chamber 32 and further reducing the fuel supply. The result is a shift by the air/fuel mixture ratio even farther to the lean side with respect to the target mixture ratio.

As a result, the $O_2$ sensor is turned OFF, and from that time forward the feedback coefficient FK is reduced, thereby moving the air/fuel mixture toward the richer side:

When the voltage from the $O_2$ sensor falls below a certain valve (500 mV, for example), then, as shown in Figure 2, the output from the $O_2$ sensor is turned off. In order to reverse the mixture concentration from the rich side to the lean side, the decision in step 1 becomes NO, and then a determination is made on whether or not the rich flag = 0 (step 19). In this case, the rich flag had been set to 1 prior to the move toward the lean condition (see step 3), so the decision at step 19 is NO. At this point, the rich flag is set to 0 (step 20), and then the lean skip is set to OFF (cleared) (step 21) and the lean delay timer is reset as well (step 22). Next, the rich delay timer is reset (step 23) and then the lean timer is reset (step 24) to make it lean (step 25).

As described above, since the rich flag was set to 0 (step 20), the decision at step 19 is YES, and the program moves on to step 26 where a decision is made as to whether or not the lean skip is ON, however, since it was turned OFF in step 20, the decision at step 26 is NO and the lean delay timer counts UP (step 27). This count UP continues until the lean delay timer is ≥ (2) (step 28), and when the lean delay timer is ≥ (2), the lean skip is turned on (step 29), and the feedback coefficient FK is reduced by (4) (FK = FK - (4)) (step 30).

By reducing the feedback coefficient FK by means of (4) as described above, the feedback coefficient becomes momentarily small, and the step number STP of the step motor 55 as computed according to the foregoing Equation (2) decreases. As a result, the aperture of ABCV 36 diminishes, thereby decreasing the supply of bleed air to the fuel supply chamber 32, in turn decreasing the pressure inside the fuel supply chamber 32, causing the fuel supply to increase. The result is a shift of the air/fuel mixture toward the rich side with respect to the target air/fuel ratio.

At the end point of the above described process, the lean skip is turned on (step 29) which causes the decision result at step 26 to be YES. Then the lean timer counts UP until it reaches a value ≥ TL (step 31 - 33) and when it reaches a value ≥ TL, the lean coefficient SL is subtracted from the feedback coefficient FK (FK = FK-SL) (step 34) and the lean timer is reset (step 35).

As described above, when the lean coefficient SL is added from the feedback coefficient FK, the computation according to the foregoing Equation (2) causes the step motor 55 to reduce the step number STP further. As a result, the aperture of ABCV 36 decreases, causing the supply of bleed air to the fuel supply chamber 32 to further decrease, in turn decreasing the internal pressure of the fuel supply chamber 32 and increasing further the fuel supply. The result is a further movement of the air/fuel mixture to the rich side with respect to the target air/fuel ratio.

The repetition of the above described feedback control maintains the air/fuel mixture ratio at the target value. While Figure 2 indicates one cycle of running the routine of Figure 3, actually the areas (5) and (6) in Figure 2 (Rich and Lean Timer Frequency TR, TL) form stair-like characteristics (as shown in the enlarged areas A and B below said curve) because the flow of the intake air reduces lots of time in that portion and the respective rich or lean proportional coefficient becomes larger due to high load conditions of the engine, i.e., the coefficients slightly vary in said areas stairwise.

As described above, because the present embodiment determined the feedback coefficient FK as a function of the engine load parameter (absolute air intake pressure) that affects it, in cases where engine load would change the feedback coefficient FK or during operation when there is low air intake flows, it is possible to correct the air/fuel ratio. Thus, the target air/fuel ratio value can be accurately set throughout the entire operating range of the engine 1.

Also, because it was further possible in the present embodiment to base the time change rate for the feedback coefficient on the engine load, it was possible to keep the feedback frequency constant with respect to the air intake flow. As a result, it is possible to hold down the variation in the air/fuel mixture ratio across the entire operating range of the engine 1, and to maintain a high cleansing efficiency for the exhaust gazes by the catalytic converter 20.

In the foregoing embodiment, the feedback coefficient FK was a function of engine load (absolute air intake pressure), but similar effects could be obtained by making the feedback coefficient FK a function the air intake volume itself, or a function of other parameters that affect it such as engine RPM or a combination engine load and engine RPM.

As is clear from the description above, this invention changes the feedback control for the supply of gas fuel based upon the additional control variable of an engine condition such as for example, an engine performance demand, specifically of air intake volume, or other parameters that influence it (engine load, engine RPM or both), so that the control variable can be corrected for differences in the change rate of the control variable for engine load or differences in the air/fuel ratio during low air intake operating ranges so that the air/fuel mixture can remain at the target air/fuel ratio throughout the entire operating range of the engine.

In addition, since the feedback control variable is changed per time unit in response to the air intake volume (or per litre of intake air), the feedback frequency remains constant with respect to the air intake flow, thereby minimizing variations in the air/fuel mixture throughout the entire range of engine operations and maintaining the catalyst at high cleansing efficiency.

**Claims**

1. Method for controlling a gas-fuelled engine, performing a feedback control of an air/fuel ratio towards a target air/fuel ratio, controlling a fuel supply by means of a bleed air control in response to a signal from an exhaust gas sensor detecting an oxygen content in said exhaust gas, **characterised in that,** an engine condition is additionally detected and used as an additional control parameter of the feedback control of the air/fuel ratio.

2. Method as claimed in claim 1, **characterised in that,** the additional control parameter is an engine performance demand.

3. Method as claimed in claims 1 or 2, **characterised in that,** the additional control parameter is a volume of intake air flow.

4. Method as claimed in claim 2, **characterised in that,** the additional control parameter is engine load and/or engine speed.

5. Method as claimed in at least one of the preceding claims 1 to 4, **characterised in that,** the feedback control controls the number of motor steps (STP) of a stepping motor (55) for adjusting a bleed air admixing control valve (36) and that a feedback coefficient (FK) which is used to calculate the number of steps (STP) of the stepping motor (55) is responsive to the additional control parameter.

6. Method as claimed in at least one of the preceding claims 1 to 5, **characterised in that,** a feedback frequency per litre of intake air flow is substantially kept constant with respect to the volume of intake air flow.

7. Apparatus for controlling a gas-fuelled engine performing a feedback control of an air fuel ration towards a target air/fuel ratio, controlling a fuel supply by means of a bleed air control in response to a signal from an exhaust gas sensor detecting an oxygen consent in said exhaust gas, and comprising a control means including a calculating means for performing the feedback control of the actual air/fuel ratio, **characterised in that,** the control means is adapted to receive an engine performance demand responsive signal to derive a feedback coefficient (FK) for calculating a number of motor steps (STP) of a stepping motor (55), adjusting a bleed air control valve (36) for regulating a fuel supply by a supply of bleeding air in response to the engine performance demand a responsive signal determining the volume of intake air flow.

FIG.1

O2 SENSOR THRESHOLD VOLTAGE

O2 SENSOR OUTPUT

FEEDBACK COEFFICIENT FK

FIG.2

EP 0 678 662 A2

FIG.3

FIG.4

FIG.5

13

FIG.6

FIG.7